# FASCICULE DE BREVET EUROPEEN

(11) **EP 2 274 183 B1**
(45) Date de publication et mention de la délivrance du brevet: **02.11.2011**
(21) Numéro de dépôt: 09728025.9
(22) Date de dépôt: 02.04.2009
(51) Int. Cl.: B60R 16/027, H01R 35/02

(54) **MODULE DE COMMANDE SOUS VOLANT ET METHODE D'ASSEMBLAGE ASSOCIEE**
STEUERMODUL FÜR EIN HINTERLENKRAD UND ENTSPRECHENDES MONTAGEVERFAHREN
BEHIND-STEERING WHEEL CONTROL MODULE AND ASSOCIATED METHOD OF ASSEMBLY

(30) Priorité: 03.04.2008 EP 08154042
(43) Date de publication de la demande: 19.01.2011
(73) Titulaire: Delphi Technologies, Inc., Troy, Michigan 48007 (US)
(72) Inventeur: TUAL, Nicolas, F-67100 Strasbourg (FR); BIACCHI, Michael, F-67440 Lochwiller (FR); CORDIER, Emmanuel, F-67190 Grendelbruch (FR)
(74) Mandataire: Robert, Vincent
(86) Numéro de dépôt international: PCT/EP2009/053953
(87) Numéro de publication internationale: WO 2009/121931

(56) Documents cités:
- EP-A- 0 779 182
- DE-A1- 19 508 259
- DE-A1- 19 717 625

## Description

### DOMAINE TECHNIQUE

La présente invention concerne un module de commande sous volant et une méthode d'assemblage de ce module sur une colonne de direction de véhicule automobile.

### ARRIERE-PLAN TECHNOLOGIQUE DE L'INVENTION

La présente invention concerne plus particulièrement un module de commande sous volant qui comprend un boîtier ou support sur lequel est monté un contacteur électrique rotatif et qui est prévu pour être assemblé sur une colonne de direction. Un tel type de module de commande sous volant est décrit notamment dans le document FR2829071. E PO779 182 A divulgue quant à lui Les caractéristiques de préamble de la revendication 1.

Le contacteur électrique rotatif, également appelé contact tournant, est un dispositif assurant la liaison électrique entre deux corps respectivement fixe et mobile animés d'un mouvement relatif de rotation. Un tel dispositif est employé dans les colonnes de direction des véhicules pour permettre la connexion électrique entre des éléments situés dans le volant, et par conséquent mobiles en rotation, et un circuit fixe câblé dans l'habitacle desdits véhicules.

Un contacteur électrique rotatif est configuré de telle manière que la partie fixe, dite stator, et la partie mobile, dite rotor, définissent entre elles un espace annulaire d'axe confondu à l'axe de rotation, dans lequel est enroulé en spirale un câble plat flexible véhiculant plusieurs lignes conductrices. Cet espace annulaire comporte notamment deux parois d'allure parallèle à l'axe de rotation auxquelles sont fixées les deux extrémités du câble plat.

Un tel exemple de contacteur électrique tournant est décrit et représenté plus en détail dans le document EP1320153.

Le contacteur électrique tournant est généralement pré-assemblé sur le boîtier, puis le module de commande sous volant complet est acheminé vers la ligne d'assemblage où il est monté sur la colonne de direction. Pendant cette phase d'acheminement, il est nécessaire de bloquer le rotor en rotation par rapport au stator, de manière qu'il soit maintenu dans une position angulaire médiane ou « point milieu » correspondant à la position angulaire médiane de la colonne de direction sur laquelle il doit être monté.

Ce blocage en rotation est réalisé au moyen d'un manchon d'indexation qui est agencé coaxialement à l'intérieur du contacteur électrique rotatif, qui est lié en rotation au rotor, et qui comporte des moyens d'indexation angulaire coopérant avec une partie fixe du module. Le manchon d'indexation comporte, par exemple, un doigt d'indexation susceptible de coopérer avec une encoche d'indexation associée agencée sur une partie fixe tel que le stator. Le manchon d'indexation est monté coulissant axialement dans le contacteur électrique rotatif et il est sollicité axialement vers sa position d'indexation, vers le haut, par un ressort.

Le manchon d'indexation est normalement suffisant pour bloquer le rotor en rotation jusqu'à son assemblage sur la colonne. Lors du montage du volant sur la colonne, le manchon d'indexation est repoussé axialement vers le bas, à l'encontre de son ressort, jusqu'à une position neutre, de sorte que le doigt d'indexation sort de son encoche d'indexation et que le rotor soit libre en rotation par rapport au stator.

Cependant, entre l'étape de pré-assemblage du module de commande sous volant et l'étape de montage sur la colonne de direction, il arrive que le manchon d'indexation soit déplacé accidentellement vers sa position neutre ce qui conduit à une incertitude sur la position angulaire du rotor lors du montage du volant, le maintien du rotor dans sa position médiane n'étant plus assuré. Les conséquences peuvent être que, après le montage du volant sur la colonne, le conducteur électrique souple, qui s'étend dans l'espace radial entre le rotor et le stator, peut se retourner lorsque le volant vient en butée gauche ou il peut même s'arracher lorsque le volant vient en butée droite.

Pour résoudre ce problème, il a été proposé de monter une clé de verrouillage sur le boîtier. Cette clé est fixée sur le boîtier et elle comprend des surfaces de butée qui coopèrent avec des ergots prévus sur le bord périphérique du rotor pour le bloquer angulairement. Ainsi, même si le manchon d'indexation est déplacé accidentellement, le rotor est toujours maintenu dans sa position médiane par la clé de verrouillage. La clé peut être retirée une fois que le module de commande est monté sur la colonne de direction, juste avant le montage du volant.

### RESUME DE L'INVENTION

La présente invention vise à proposer une alternative à la clé de verrouillage qui permette d'assurer une parfaite indexation angulaire du rotor par rapport au stator jusqu'à son assemblage sur la colonne.

Dans ce but, l'invention propose un module de commande sous volant du type mentionné précédemment, **caractérisé en ce qu'**il comporte un capot amovible qui est agencé sur le module de commande sous volant de manière à envelopper le tronçon d'extrémité axiale supérieure du manchon d'indexation en vue d'empêcher l'accès au manchon d'indexation.

Le capot selon l'invention permet d'empêcher l'accès au manchon d'indexation entre l'étape d'assemblage du module de commande sous volant et l'étape de montage du volant sur la colonne de direction. En particulier, l'accès au manchon d'indexation est empêché pendant les étapes d'acheminement du module jusqu'à la ligne d'assemblage sur la colonne de direction. L'accès au manchon d'indexation n'est permis qu'au dernier moment, juste avant le montage du volant. Le capot joue ainsi le rôle d'une goupille de sécurité.

En plus de permettre l'indexation angulaire du rotor par rapport au stator, l'invention permet d'assurer un meilleur guidage axial du module lors de son assemblage sur la colonne. En effet, lors du montage du module de commande sous volant sur la colonne, la cloison tubulaire interne du capot de protection assure le centrage et l'alignement axial du module par rapport à la colonne de direction. Auparavant, avec les solutions de l'art antérieur, du fait des tolérances de fabrication, notamment sur le diamètre de la colonne de direction, il arrivait fréquemment que le module de commande sous volant soit monté avec une inclinaison non souhaitée par rapport à l'axe de la colonne de direction.

Selon d'autres caractéristiques de l'invention :
- le capot comporte des moyens d'emboîtement pour sa fixation de manière amovible sur un élément du module de commande ;
- les moyens d'emboîtement coopèrent avec des moyens complémentaires agencés sur le contacteur électrique rotatif ;
- les moyens d'emboîtement sont agencés sur une cloison tubulaire externe du capot qui est insérée axialement entre le rotor et le manchon d'indexation ;
- les moyens d'emboîtement comportent au moins une languette sécable qui est conformée de manière à se briser lors du premier démontage du capot par rapport au contacteur électrique rotatif ;
- la languette est prévue pour s'emboîter dans une cavité aménagée sur le contacteur électrique rotatif et après le premier démontage, la languette reste bloquée dans la cavité de manière à avertir visuellement qu'un premier démontage a été effectué ;
- les moyens d'emboîtement comportent au moins un clip de fixation qui est prévu pour s'emboîter axialement dans une encoche de verrouillage associée aménagée sur le contacteur électrique rotatif et l'encoche de verrouillage comporte une portion angulaire de blocage et une portion angulaire de libération de manière à permettre le verrouillage et le déverrouillage du capot sur le contacteur électrique rotatif par pivotement autour de l'axe du capot ;
- l'encoche de verrouillage comporte un bossage qui est aménagé entre les deux portions et qui retient le clip de fixation associée en position verrouillée ;
- le capot comporte des moyens de guidage axial qui coopèrent avec une portion de la colonne de direction pour guider le module lors de son assemblage sur la colonne de direction ;
- les moyens de guidage axial sont constitués par une cloison tubulaire interne qui est prévue pour coopérer avec une portion de la colonne de direction ;
- le capot comporte un moyen de préhension permettant d'exercer une traction sur le capot pour le retirer du module.

L'invention propose aussi une méthode d'assemblage d'un module de commande sous volant et d'un volant sur une colonne de direction, le module de commande sous volant étant réalisé selon les enseignements précédents, **caractérisée en ce qu'**elle comporte les étapes suivantes :
- montage axial du module sur le tronçon d'extrémité axiale supérieure de la colonne de direction en utilisant le capot comme moyen de guidage axial et d'alignement axial du module par rapport à la colonne,
- retrait du capot,
- montage du volant sur la colonne en faisant coulisser axialement le manchon d'indexation vers sa position neutre libérant le rotor en rotation.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est une vue éclatée en perspective qui représente un module de commande sous volant comprenant un capot selon l'invention ;
- la figure 2 est une vue en coupe axiale qui représente le module de la figure 1 ;
- la figure 3 est une vue en perspective qui représente le capot de la figure 1 ;
- la figure 4 est une vue en perspective éclatée qui représente une variante de réalisation du capot de la figure 1 comportant une languette sécable ;
- la figure 5 est une vue en perspective avec coupe axiale qui représente le capot de la figure 4 et la languette sécable emboîtée dans sa cavité.

### DESCRIPTION DES MODES DE REALISATION PREFERES

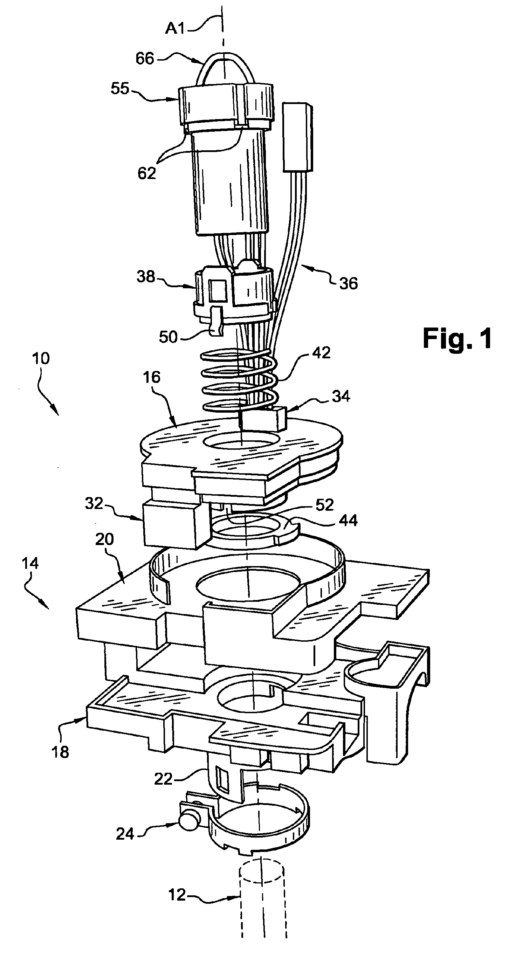

Sur la figure 1 on a représenté un module 10 de commande sous volant réalisé conformément aux enseignements de l'invention et prévu pour être monté coaxialement sur une colonne de direction 12 d'axe A1. Il comporte un boîtier 14 ou support sur lequel est monté un contacteur électrique rotatif 16.

Dans la suite de la description, on utilisera à titre non limitatif une orientation verticale suivant l'axe A1 de la colonne de direction 12. Des éléments identiques ou similaires pourront être désignés par les mêmes signes de référence.

Le boîtier 14 comporte ici une coque inférieure 18 et une coque supérieure 20 qui sont fixées l'une sur l'autre. La face supérieure de la coque supérieure 20 forme une platine qui reçoit le contacteur électrique rotatif 16. La coque inférieure 18 comporte une extension tubulaire inférieure 22 qui est prévue pour être montée sur un tronçon de la colonne de direction 12 et maintenue au moyen d'un collier de serrage 24.

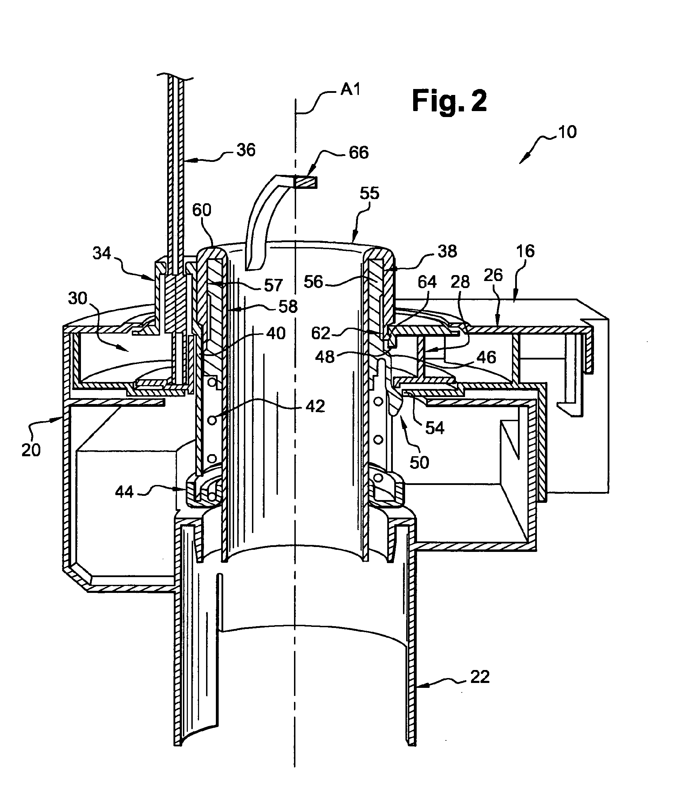

Comme représenté plus en détail sur la figure 2, le contacteur électrique rotatif 16 comporte un stator 26 qui est fixé sur la coque supérieure 20 du boîtier 14 et un rotor 28 qui est monté à rotation sur le stator 26 en délimitant un espace radial 30 prévu pour recevoir des conducteurs électriques souples (non représentés) liés d'un côté à un connecteur fixe 32 sur le stator 26 et du côté opposé à un connecteur rotatif 34 sur le rotor 28. Le connecteur rotatif 34 est ici pourvu de câbles électriques 36 pour le raccordement à des dispositifs électroniques (non représentés) du volant prévu pour être monté sur la colonne 12.

Un manchon d'indexation 38 est agencé coaxialement à l'intérieur du contacteur électrique rotatif 16. Le manchon d'indexation 38 est guidé en coulissement axial le long de la paroi axiale interne 40 du rotor 28. Il est sollicité axialement vers le haut, c'est-à-dire vers sa position d'indexation, par un ressort 42 qui prend appui sur une coupelle inférieure 44 fixée dans le boîtier 14. Le manchon d'indexation 38 comporte une surface radiale 46 qui vient en appui axial contre une surface de butée 48 agencée sur le rotor 28. Le manchon d'indexation 38 comporte un doigt ou clip d'indexation 50 qui s'étend radialement à travers une fente axiale 52 aménagée dans la paroi axiale interne 40 du rotor 28 et qui est reçu, en position d'indexation angulaire, dans une encoche d'indexation 54 aménagée dans la paroi périphérique interne du stator 26.

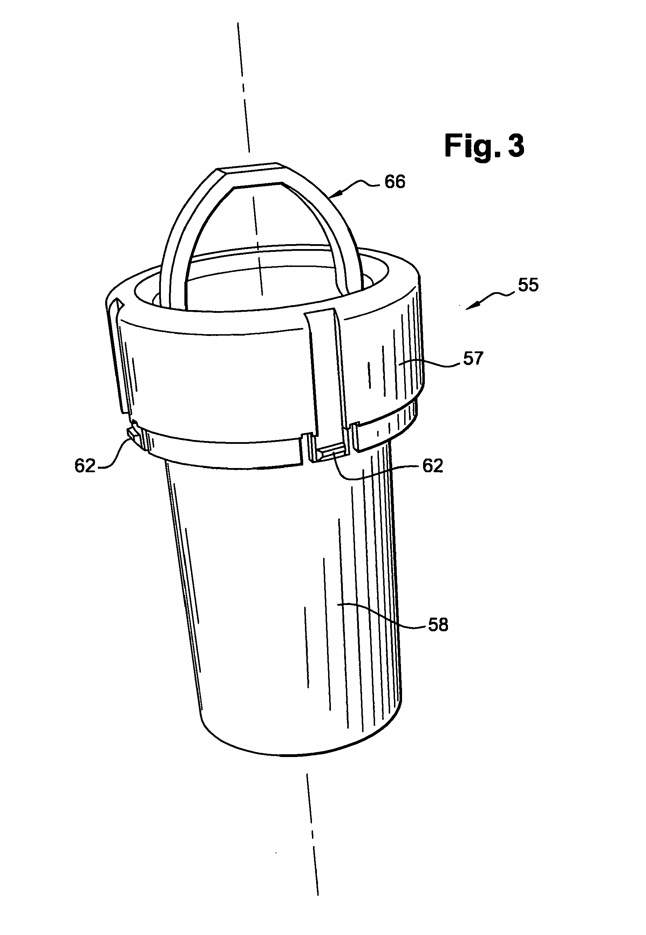

Conformément aux enseignements de l'invention, un capot 55 amovible, qui est représenté en détail sur la figure 3, est agencé sur le module de commande sous volant 10 de manière à envelopper le tronçon d'extrémité axiale supérieure 56 du manchon d'indexation 38. Le capot 55 a une forme tubulaire d'axe A1 et comporte une cloison axiale externe 57 qui est insérée axialement entre le rotor 28 et le manchon d'indexation 38, et une cloison axiale interne 58 qui s'étend le long de la paroi axiale interne du manchon d'indexation 38. Les extrémités axiales supérieures des deux cloisons 57, 58 sont liées par une paroi radiale annulaire 60.

Avantageusement, la cloison interne 58 s'étend axialement jusqu'à l'extension tubulaire inférieure 22 du boîtier 14 de manière à empêcher tout accès au manchon d'indexation 38 et de manière à faciliter le guidage en alignement du module 10 de commande sous volant sur la colonne de direction 12.

Comme on peut le voir notamment sur la figure 3, la cloison externe 57 du capot 55 est pourvu d'ergots ou clips de fixation 62 qui coopèrent avec des logements 64 complémentaires agencés dans le bord périphérique interne du rotor 28 pour maintenir par emboîtement le capot 55 sur le rotor 28.

Avantageusement, l'extrémité axiale supérieure du capot 55 est munie d'une anse 66 permettant d'exercer, par exemple manuellement, une traction axiale vers le haut pour retirer le capot 55 du module 10 et ainsi libérer le manchon d'indexation 38 pour permettre le montage du volant sur la colonne de direction 12.

Une méthode d'assemblage du module 10 de commande sous volant selon l'invention comprend les étapes suivantes :
- assemblage du boîtier avec le contacteur électrique rotatif et le manchon d'indexation, le rotor étant alors indexé radialement par rapport au stator grâce au manchon d'indexation,
- insertion axiale du capot 55 sur le manchon d'indexation jusqu'à emboîtement des ergots de fixation dans les logements complémentaires.

On dispose à ce stade d'un module de commande sous volant dans lequel l'accès au manchon d'indexation est empêché par le capot 55.

Le module de commande peut ainsi être acheminé jusqu'à la ligne de fabrication où il est monté sur la colonne de direction sans risque de déplacement accidentel du manchon d'indexation, donc sans risque de décalage angulaire entre le rotor et le stator par rapport à la position médiane désirée.

La méthode d'assemblage du module 10 sur la colonne de direction comprend les étapes suivantes :
- montage axial du module 10 sur le tronçon d'extrémité axiale supérieure de la colonne de direction, la cloison interne du capot 55 contribuant au guidage axial et à l'alignement axial du module 10 par rapport à la colonne,
- retrait du capot par traction exercée sur le capot au moyen de l'anse,
- montage du volant sur la colonne par insertion axiale par le haut, à travers le module 10, ce qui provoque le coulissement axial du manchon d'indexation vers une position neutre dans laquelle le doigt d'indexation ne coopère plus avec l'encoche associée du stator.

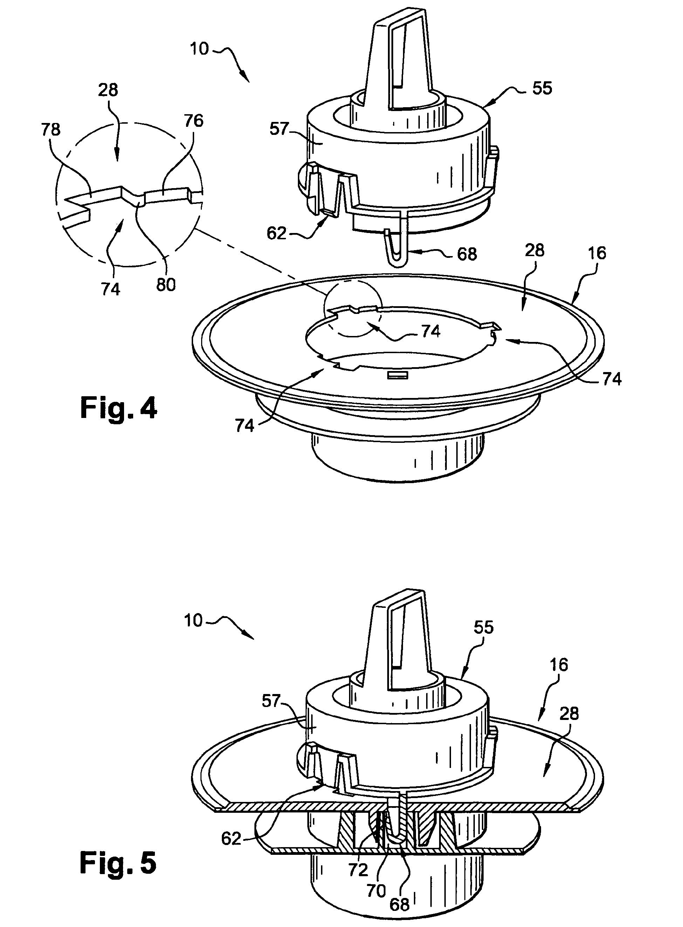

Une variante de réalisation du module de commande sous volant 10 selon l'invention est représentée sur les figures 4 et 5. Dans cette variante de réalisation, les moyens d'emboîtement 62 du capot 55 comportent des clips de fixation 62 globalement similaires à ceux décrits en relation avec les figures 1 à 3 et, de manière additionnelle, une languette 68 sécable qui est prévue pour être reçue à emboîtement élastique dans une cavité 70 complémentaire aménagée sur le rotor 28.

La languette 68 s'étend globalement axialement vers le bas, depuis la cloison axiale externe 57 du capot 55, de manière à pouvoir être insérée axialement dans la cavité 70 lors du montage du capot 55 sur le module 10. La languette 68 a ici globalement la forme d'un « J » de sorte que, lors de son insertion dans la cavité 70, les branches du J se compriment transversalement, puis se détendent après que l'extrémité libre du J ait dépassé axialement un rebord 72 formé dans le rotor 28, ce qui empêche tout retrait axial vers le haut de la languette 68. La languette 68 est liée à la cloison axiale externe 57 par une partie sécable, comportant par exemple une amorce de rupture, de manière que la languette 68 se sépare du capot 55 lors du premier démontage du capot 55 par rapport au module 10. Ainsi, lors de la manipulation du module 10, si une languette 68 cassée est présente dans la cavité 70 cela indique visuellement que le module 10 a déjà été démonté au moins une fois. La liaison entre la languette 68 et le capot 55 est conformée de manière à se rompre sous un effort de valeur déterminée par construction.

De plus, comme on peut le voir en détail sur la figure 4, le bord périphérique interne du rotor 28 comporte des encoches de verrouillage 74 de forme adaptée pour permettre le blocage angulaire et le blocage axial des clips de fixation 62 lorsque le capot 55 occupe sa position montée sur le module 10. Chaque encoche de verrouillage 74 comporte une portion angulaire de blocage 76 qui retient axialement le clip de fixation 62 et une portion angulaire de libération 78 formant un retrait radialement vers l'extérieur.

Lorsque les clips de fixation 62 sont alignés angulairement avec les portions angulaires de libération 78, alors le capot 55 occupe une position angulaire déverrouillée, les clips 62 n'étant plus retenus sur le rotor 28. Lorsque les clips de fixation 62 sont alignés angulairement avec les portions angulaires de blocage 76, ils sont emboîtés sur le rotor 28 ce qui empêche le retrait axial du capot 55, celui-ci occupant alors une position angulaire verrouillée. De préférence, le pivotement nécessaire entre la position déverrouillée et la position verrouillée est d'environ dix degrés.

Avantageusement, un bossage 80 est aménagé entre les deux portions angulaires 76, 78 de chaque encoche de verrouillage 74. Ce bossage 80 coopère avec un bord du clip de fixation 62 associé pour retenir le capot 55 en position verrouillée. Grâce à ce bossage 80, l'utilisateur ressent un point dur lors de l'opération de déverrouillage par pivotement, depuis la position verrouillée jusqu'à la position déverrouillée, ce qui lui permet d'identifier le passage entre les deux positions.

Le montage du capot 55 selon cette variante de réalisation est effectué de la manière suivante. Lors du premier montage, l'utilisateur monte le capot 55 par insertion axiale des clips de fixation 62 dans les encoches de verrouillage 74 et par insertion axiale de la languette 68 dans la cavité 70.

Lors du premier démontage, l'utilisateur fait pivoter le capot 55 de quelques degrés autour de son axe A1, de manière à provoquer la rupture de la languette 68, qui reste enfichée dans la cavité 70, et de manière que les clips de fixation 62 dépassent les bossages 80. Le capot 55 peut alors être retiré axialement vers le haut.

Dans le cas où le capot 55 doit être remonté sur le module 10, l'opération de montage peut être réalisée de la même manière que précédemment excepté qu'il n'y a plus de languette 68 sur le capot 55, celle-ci étant restée enfichée dans le rotor 28. Le montage peut aussi se faire par pivotement angulaire depuis la position déverrouillée. L'opération de démontage est la même que précédemment excepté que la languette 68 est déjà séparée du capot 55.

Le déverrouillage du capot 55 se fait donc à la manière d'un système dit à baïonnette ou quart de tour. Le verrouillage peut se faire soit par insertion axiale et emboîtement des clips de fixation 62, soit par un mouvement du type à baïonnette.

Cette variante de réalisation présente l'avantage de permettre un démontage et un remontage aisé du capot 55 tout en permettant de signaler à l'utilisateur, pour des raisons de sécurité, qu'un premier démontage du capot 55 a déjà eu lieu. Ce système de fixation du capot est particulièrement fiable. Il permet par ailleurs une réutilisation du système d'indexation angulaire du rotor par rapport au stator en utilisant à nouveau le capot 55, soit lors d'opérations de maintenance du contacteur électrique rotatif 16, soit en cas de rupture accidentelle de la languette 68.

## Revendications

1. Module (10) de commande sous volant prévu pour être assemblé sur une colonne de direction (12) de véhicule automobile, comportant un boîtier (14) sur lequel est monté un contacteur électrique rotatif (16) qui comprend un rotor (28) et un stator (26), du type comportant un manchon d'indexation angulaire (38) qui est mobile entre une position d'indexation dans laquelle il bloque le rotor dans une position angulaire déterminée par rapport au stator, et une position neutre dans laquelle le rotor peut tourner par rapport au stator,
**caractérisé en ce qu'**il comporte un capot amovible (55) qui est agencé sur le module (10) de commande sous volant envelopperant le tronçon d'extrémité axiale supérieure (56) du manchon d'indexation (38) et empêchant l'accès au manchon d'indexation (38).

2. Module selon la revendication précédente, **caractérisé en ce que** le capot (55) comporte des moyens d'emboîtement (62) pour sa fixation de manière amovible sur un élément (28) du module (10) de commande.

3. Module selon la revendication précédente, **caractérisé en ce que** les moyens d'emboîtement (62) coopèrent avec des moyens complémentaires (64) agencés sur le contacteur électrique rotatif (16).

4. Module selon la revendication précédente, **caractérisé en ce que** les moyens d'emboîtement sont agencés sur une cloison tubulaire externe (57) du capot (55) qui est insérée axialement entre le rotor et le manchon d'indexation.

5. Module selon la revendication 3 ou 4, **caractérisé en ce que** les moyens d'emboîtement comportent au moins une languette (68) sécable qui est conformée de manière à se briser lors du premier démontage du capot (55) par rapport au contacteur électrique rotatif (16).

6. Module selon la revendication précédente, **caractérisé en ce que** la languette (68) est prévue pour s'emboîter dans une cavité (70) aménagée sur le contacteur électrique rotatif (16) et **en ce que** après le premier démontage, la languette (68) reste bloquée dans la cavité (70) de manière à avertir visuellement qu'un premier démontage a été effectué.

7. Module selon la revendication 5 ou 6, **caractérisé en ce que** les moyens d'emboîtement comportent au moins un clip de fixation (62) qui est prévu pour s'emboîter axialement dans une encoche de verrouillage (74) associée aménagée sur le contacteur électrique rotatif (16) et **en ce que** l'encoche de verrouillage (74) comporte une portion angulaire de blocage (76) et une portion angulaire de libération (78) de manière à permettre le verrouillage et le déverrouillage du capot (55) sur le contacteur électrique rotatif (16) par pivotement autour de l'axe (A1) du capot (55).

8. Module selon la revendication précédente, **caractérisé en ce que** l'encoche de verrouillage (74) comporte un bossage (80) qui est aménagé entre les deux portions (76, 78) et qui retient le clip de fixation (62) associé en position verrouillée.

9. Module selon l'une quelconque des revendications précédentes, **caractérisé en ce que** le capot (55) comporte des moyens de guidage axial (58) qui coopèrent avec une portion de la colonne de direction (12) pour guider le module lors de son assemblage sur la colonne de direction.

10. Module selon la revendication précédente, **caractérisé en ce que** les moyens de guidage axial sont constitués par une cloison tubulaire interne (58) qui est prévue pour coopérer avec une portion de la colonne de direction (12).

11. Module selon l'une quelconque des revendications précédentes, **caractérisé en ce que** le capot comporte un moyen de préhension (66) permettant d'exercer une traction sur le capot (55) pour le retirer du module (10).

12. Méthode d'assemblage d'un module (10) de commande sous volant et d'un volant sur une colonne de direction, le module (10) de commande sous volant étant réalisé selon l'une quelconque des revendications précédentes, **caractérisée en ce qu**'elle comporte les étapes suivantes :
- montage axial du module (10) sur le tronçon d'extrémité axiale supérieure de la colonne de direction (12) en utilisant le capot (55) comme moyen de guidage axial et d'alignement axial du module (10) par rapport à la colonne (12),
- retrait du capot (55),
- montage du volant sur la colonne (12) en faisant coulisser axialement le manchon d'indexation (38) vers sa position neutre libérant le rotor (28) en rotation.

## Claims

1. Steering wheel control unit (10) intended to be assembled with a motor vehicle steering column (12), including a case (14) on which is mounted a rotary electrical contactor (16) which comprises a rotor (28) and a stator (26), of the type including an angular indexing sleeve which is movable between an indexing position in which it locks the rotor in a determined angular position relative to the stator, and a neutral position in which the rotor can turn relative to the stator,
**characterised in that** it includes a removable cover (55) which is arranged on the steering wheel control unit (10) encasing the upper axial end section (56) of the indexing sleeve (38) and preventing access to the indexing sleeve (38).

2. Unit as described in the preceding claim, **characterised in that** the cover (55) includes interlocking means (62) to fix it removably onto an element (28) of the control unit (10).

3. Unit as described in the preceding claim, **characterised in that** the interlocking means (62) co-operate with complementary means (64) arranged on the rotary electrical contactor (16).

4. Unit as described in the preceding claim, **characterised in that** the interlocking means are arranged on an external tubular partition (57) of the cover (55) which is inserted axially between the rotor and the indexing sleeve.

5. Unit as described in claim 3 or 4, **characterised in that** the interlocking means include at least one divisible tongue (68) which is so conformed as to break on the first removal of the cover (55) relative to the rotary electrical contactor (16).

6. Unit as described in the preceding claim, **characterised in that** the tongue (68) is intended to fit into a cavity (70) provided on the rotary electrical contactor (16) and **in that** after the first removal, the tongue (68) remains locked in the cavity (70) so as to provide a visual alert that a first removal has taken place.

7. Unit as described in claim 5 or 6, **characterised in that** the interlocking means include at least one fixing clip (62) which is intended to fit axially into an associated locking notch (74) provided on the rotary electrical contactor (16) and **in that** the locking notch (74) includes an angular locking portion (76) and an angular release portion (78) so as to allow locking and unlocking of the cover (55) on the rotary electrical contactor (16) by pivoting about the axis (A1) of the cover (55).

8. Unit as described in the preceding claim, **characterised in that** the locking notch (74) includes a protrusion (80) which is provided between the two portions (76, 78) and which retains the associated fixing clip (62) in the locked position.

9. Unit as described in any one of the preceding claims, **characterised in that** the cover (55) includes axial guiding means (58) which co-operate with a portion of the steering column (12) to guide the unit when it is assembled with the steering column.

10. Unit as described in the preceding claim, **characterised in that** the axial guiding means are formed by an internal tubular partition (58) which is designed to co-operate with a portion of the steering column (12).

11. Unit as described in any one of the preceding claims, **characterised in that** the cover includes a handling means (66) allowing traction to be applied to the cover (55) to withdraw it from the unit (10).

12. Method for assembly of a steering wheel control unit (10) and of a steering wheel on a steering column, the steering wheel control unit (10) being formed as described in any one of the preceding claims, **characterised in that** it includes the following steps:
- axial mounting of the unit (10) on the upper axial end section of the steering column (12) using the cover (55) as a means for axial guiding and axial alignment of the unit (10) relative to the steering column (12),
- withdrawal of the cover (55),
- mounting of the steering wheel on the column (12) by axially sliding the indexing sleeve (38) towards its neutral position releasing the rotor (28) in rotation.

## Patentansprüche

1. Steuermodul (10) an einem Lenkrad, welches Modul dazu vorgesehen ist, an eine Lenksäule (12) eines Kraftfahrzeugs montiert zu werden, enthaltend ein Gehäuse (14), an das ein elektrischer Drehkontaktgeber (16) angebracht ist, der einen Rotor (28) und einen Stator (26) aufweist, der mit einer Winkelindexierungsmuffe (38) ausgebildet ist, die zwischen einer Indexierungsstellung, in welcher sie den Rotor in einer bestimmten Winkelstellung bezüglich des Stators sichert, und einer Neutralstellung verstellbar ist, in welcher der Rotor bezüglich des Stators drehbar ist,
**dadurch gekennzeichnet, dass** es eine lösbare Kappe (55) aufweist, die an dem Lenkradsteuermodul (10) angeordnet ist und dabei den axial oberen Endabschnitt (56) der Indexierungsmuffe (38) umhüllt und den Zugang zur Indexierungsmuffe (38) verhindert.

2. Modul nach dem vorangehenden Anspruch, **dadurch gekennzeichnet, dass** die Kappe (55) Eingriffsmittel (62) aufweist, um sie lösbar an einem Teil (28) des Steuermoduls (10) zu befestigen.

3. Modul nach dem vorangehenden Anspruch, **dadurch gekennzeichnet, dass** die Eingriffsmittel (62) mit komplementären Mitteln (64) zusammenwirken, die an dem elektrischen Drehkontaktgeber (16) angeordnet sind.

4. Modul nach dem vorangehenden Anspruch, **dadurch gekennzeichnet, dass** die Eingriffsmittel an einer rohrförmigen Außenwand (57) der Kappe (55) angeordnet sind, die axial zwischen Rotor und Indexierungsmuffe eingesetzt ist.

5. Modul nach Anspruch 3 oder 4, **dadurch gekennzeichnet, dass** die Eingriffsmittel zumindest eine abtrennbare Zunge (68) aufweisen, die so ausgebildet ist, dass sie bricht, wenn die Kappe (55) zum ersten Mal vom elektrischen Drehkontaktgeber (16) abmontiert wird.

6. Modul nach dem vorangehenden Anspruch, **dadurch gekennzeichnet, dass** die Zunge (68) dazu vorgesehen ist, in einen Hohlraum (70) einzugreifen, der am elektrischen Drehkontaktgeber (16) ausgeführt ist, und dass nach dem erstmaligen Abmontierten die Zunge (68) in dem Hohlraum (70) gesichert bleibt, so dass sie optisch einen Hinweis darauf gibt, dass ein erstmaliges Abmontieren erfolgt ist.

7. Modul nach Anspruch 5 oder 6, **dadurch gekennzeichnet, dass** die Eingriffsmittel zumindest einen Befestigungsclip (62) aufweisen, der dazu vorgesehen ist, axial in eine entsprechende Verriegelungseinkerbung (74) einzugreifen, die am elektrischen Drehkontaktgeber (16) ausgeführt ist, und dass die Verriegelungseinkerbung (74) einen abgewinkelten Sicherungsabschnitt (76) und einen abgewinkelten Freigabeabschnitt (78) aufweist, so dass sie die Verriegelung und die Entriegelung der Kappe (55) am elektrischen Drehkontaktgeber (16) durch Verschwenken um die Achse (A1) der Kappe (55) herum gestattet.

8. Modul nach dem vorangehenden Anspruch, **dadurch gekennzeichnet, dass** die Verriegelungseinkerbung (74) eine Erhebung (80) aufweist, die zwischen den beiden Abschnitten (76, 78) ausgeführt ist und den entsprechenden Befestigungsclip (62) in der verriegelten Stellung hält.

9. Modul nach einem der vorangehenden Ansprüche, **dadurch gekennzeichnet, dass** die Kappe (55) Mittel (58) zur axialen Führung aufweist, die mit einem Abschnitt der Lenksäule (12) zusammenwirken, um das Modul bei dessen Montage an die Lenksäule zu führen.

10. Modul nach dem vorangehenden Anspruch, **dadurch gekennzeichnet, dass** die Mittel zur axialen Führung aus einer rohrförmigen Innenwand (58) bestehen, die dazu vorgesehen ist, mit einem Abschnitt der Lenksäule (12) zusammenzuwirken.

11. Modul nach einem der vorangehenden Ansprüche, **dadurch gekennzeichnet, dass** die Kappe ein Greifmittel (66) aufweist, mit dem eine Zugkraft auf die Kappe (55) ausgeübt werden kann, um sie vom Modul (10) abzuziehen.

12. Verfahren zum Montieren eines Lenkradsteuermoduls (10) und eines Lenkrads an einer Lenksäule, wobei das Lenkradsteuermodul (10) nach einem der vorangehenden Ansprüche ausgeführt ist, **dadurch gekennzeichnet, dass** es die nachfolgenden Schritte umfasst:
- axiales Montieren des Moduls (10) an dem axial oberen Endabschnitt der Lenksäule (12) unter Verwendung der Kappe (55) als Mittel zur axialen Führung und axialen Ausrichtung des Moduls (10) bezüglich der Lenksäule (12),
- Abziehen der Kappe (55),
- Montieren des Lenkrads an die Lenksäule (12), indem die Indexierungsmuffe (38) axial in ihre Neutralstellung verschoben wird, in welcher der Rotor (28) zur Drehung freigegeben ist.
